# FASCICULE DE BREVET EUROPEEN

(11) **EP 4 182 679 B1**
(45) Date de publication et mention de la délivrance du brevet: **24.04.2024**
(21) Numéro de dépôt: 21739725.6
(22) Date de dépôt: 12.07.2021
(51) Int. Cl.: G01N 21/95, G01N 21/47, G01J 3/02

(54) **EQUIPEMENT DE MESURE POUR ANALYSE SPECTROSCOPIQUE D'OBJETS INDIVIDUELS EN DÉFILEMENT**
MESSEINRICHTUNG ZUR SPEKTROSKOPISCHEN ANALYSE EINZELNER SICH BEWEGENDER OBJEKTE
MEASUREMENT EQUIPMENT FOR SPECTROSCOPIC ANALYSIS OF INDIVIDUAL MOVING OBJECTS

(30) Priorité: 20.07.2020 BE 202005545
(43) Date de publication de la demande: 24.05.2023
(73) Titulaire: PHARMA TECHNOLOGY, 1402 Thines (BE)
(72) Inventeur: VANDENBROUCKE, Freddy, 6044 Roux (BE); DOLLINGER, Martial, 1420 Braine l'Alleud (BE)
(74) Mandataire: Gevers Patents
(86) Numéro de dépôt international: PCT/EP2021/069351
(87) Numéro de publication internationale: WO 2022/017854

(56) Documents cités:
- WO-A2-2006/116569
- US-A1- 2002 109 094

## Description

### Domaine technique

La présente invention concerne un équipement pour réaliser un contrôle par analyse spectroscopique d'objets en défilement, par exemple une analyse en spectroscopie spatialement résolue infrarouge de médicaments.

### Art antérieur

Il existe des équipements avec des sondes destinées à être placées au-dessus d'objets en défilement. Ces sondes ont une surface sur laquelle débouchent des fibres optiques d'illumination et des fibres optiques de mesure. Un problème des sondes connues est que certains objets ou portions d'objets ne sont observés par aucune fibre ou ne sont pas suffisamment bien observés pour qu'une analyse spectroscopique individualisée par objet soit possible.

Le document WO2006116569 décrit une mesure de réflectance optique appliquée à une partie du corps humain. Le document WO2014116277 décrit une géométrie de capteur transcutané. Dans ces types de mesure, les objets observés ne sont pas en défilement et ne sont pas particulièrement petits, et le problème mentionné ci-dessus ne se pose pas.

Le document EP1674859 décrit un détecteur pour détecter un certain type d'objets parmi une pluralité d'objets. Ce document se focalise sur le traitement des données reçues et ne mentionne pas le problème mentionné ci-dessus.

Le document EP3575776 décrit un système de mesure pour objets en vrac de petit volume. Dans ce système, certaines fibres sont au-dessus et en-dessous des objets, ce qui le rend particulièrement compliqué.

D'autres exemples de l'état de la technique sont fournis par les documents US20020109094 et EP1470918.

### Résumé de l'invention

Un objet de la présente invention est un équipement de mesure agencé pour une meilleure observation d'objets en défilement, en particulier dans le but d'une analyse spectroscopique spatialement résolue en infra-rouge desdits objets individualisés.

A cet effet l'invention, propose un équipement de mesure comprenant une sonde pour observer des objets en défilement selon une direction longitudinale, de préférence pour réaliser une analyse spectroscopique spatialement résolue sur lesdits objets, un dispositif de déclenchement décalé de la sonde selon la direction longitudinale, et une unité de contrôle ; la sonde comprenant :
- une surface s'étendant selon la direction longitudinale et selon une direction latérale perpendiculaire à la direction longitudinale,
- une ou plusieurs premières fibres optiques débouchant sur ladite surface et agencées pour émettre du rayonnement électromagnétique provenant d'au moins une source, chaque première fibre optique ayant un premier cône d'acceptance,
- des deuxièmes fibres optiques débouchant sur ladite surface, et agencées pour capter du rayonnement électromagnétique et le transmettre à un dispositif de réception, chaque deuxième fibre optique ayant un deuxième cône d'acceptance, les deuxièmes fibres optiques étant décalées de la ou les premières fibres optiques selon la direction longitudinale et situées d'un même côté de la ou les premières fibres optiques;
   la sonde étant telle qu'au moins un des deuxièmes cônes d'acceptance intersecte au moins un premier cône d'acceptance à moins de 10 mm de ladite surface ;
   le dispositif de déclenchement étant configuré pour détecter les objets en défilement ; et
   l'équipement de mesure étant configuré pour activer l'observation des objets par la sonde en réaction à leur détection par le dispositif de déclenchement.

Les inventeurs ont compris que les problèmes des sondes actuelles proviennent notamment de leur agencement dans lequel des deuxièmes fibres optiques (fibres optiques de captation) sont réparties en deux groupes latéraux de part et d'autre de premières fibres optiques (fibres optiques d'illumination). En effet, dans cet agencement connu, la zone centrale du convoyeur est trop loin des deuxièmes fibres optiques pour être visible. Les inventeurs ont d'abord modifié l'orientation de la sonde connue par rapport à la direction de défilement, mais alors les deuxièmes fibres optiques sont réparties sur une longueur tellement grande dans la direction de défilement que le nombre d'images prises durant un passage d'un objet sous la sonde devient insuffisant pour faire une analyse spectroscopique de qualité.

Dans la sonde selon l'invention, toutes les deuxièmes fibres optiques sont décalées selon la direction de défilement de la ou des premières fibres optiques et situées d'un même côté de la ou des premières fibres optiques. Cela permet, à nombre donné de deuxièmes fibres optiques, de mieux répartir latéralement les deuxièmes fibres optiques pour supprimer les zones où les objets ne sont pas visibles. Les petits objets situés au centre du convoyeur sont donc mieux observés notamment.

Un objectif de l'invention est de pouvoir faire des analyses rapides pour avoir un bon débit d'objets. Le nombre total de fibres optiques est alors une contrainte car distribuer les fibres optiques sur une surface de répartition de l'ensemble de fibres optiques assez petite dans le sens du défilement permet d'avoir une bonne résolution spatiale à haute vitesse de défilement, tout en évitant les fibres optiques inutiles. La répartition des fibres selon l'invention permet une meilleure répartition à nombre total de fibres optiques donné.

En outre, le nombre de deuxièmes fibres optiques effectivement actives aussi est une contrainte, car la longueur du traitement de l'information captée augmente avec le nombre de deuxièmes fibres optiques. Dans l'invention, la meilleure répartition latérale de celles-ci permet de réduire le nombre de deuxièmes fibres optiques actives, et donc le temps de traitement de l'information par mesure. Ainsi, on peut augmenter la fréquence des mesures, et in fine, améliorer les résultats mesurés car ils peuvent se baser sur un plus grand nombre de mesures (qui peuvent être moyennées pour diminuer le rapport signal sur bruit par exemple).

La disposition des fibres optiques selon l'invention permet aussi que chaque objet soit observé via des photons ayant parcourus des distances très variées au sein des objets. En effet, lorsque du rayonnement électromagnétique pénètre peu dans un objet, il en ressort proche de son point d'entrée, et est alors en général capté par une deuxième fibre optique proche de la première fibre optique qui l'a émis ; alors que lorsque du rayonnement électromagnétique pénètre plus profondément dans un objet, il en ressort plus loin de son point d'entrée, et est alors en général capté par une deuxième fibre optique plus éloignée de la première fibre optique qui l'a émis. Ainsi, une grande variation dans la distance entre premières et deuxièmes fibres optiques permet d'obtenir une information spectrale plus riche.

En outre, comme dans l'invention les première(s) et deuxièmes fibres optiques sont suffisamment proches pour que leurs cônes d'acceptance soient dissociés sur une distance valant au plus 10 mm, la captation du rayonnement électromagnétique réfléchi par les surfaces des objets situées en deçà de cette distance est particulièrement faible. C'est un grand avantage en spectroscopie infra-rouge spatialement résolue où le rayonnement électromagnétique diffusé est intéressant et le rayonnement électromagnétique réfléchi est nuisible.

Par ailleurs, puisque les première(s) et deuxièmes fibres sont décalées dans la direction de défilement, les objets sont illuminés sur une longueur de défilement clairement délimitée et sont détectés sur une longueur de défilement délimitée, ce qui simplifie le traitement des données reçues.

De plus, sachant que la largeur maximale pour répartir toutes les fibres optiques est une contrainte technique, la répartition des fibres de l'invention permet de couvrir une partie particulièrement grande de cette largeur maximale.

La sonde est du type utilisé pour des techniques d'analyse appelées Comptage de Particules Uniques (Single Particle Counter en anglais) où chaque photon est compté.

Puisque les deuxièmes fibres optiques sont décalées de la ou des premières fibres optiques selon la direction longitudinale et situées d'un même côté de la ou des premières fibres optiques, et que les deuxièmes cônes d'acceptance sont dissociés de tout premier cône d'acceptance sur une distance fixe d'au plus 10 mm mesurée à partir de ladite surface :
- il existe un premier plan de référence à 10 mm au plus de la partie de la surface sur laquelle débouchent les premières fibres optiques tel que chaque première fibre optique a un premier cône d'acceptance dont l'intersection avec le premier plan de référence forme un premier cercle, les premiers cercles de toutes les premières fibres optiques de la sonde étant inscrits dans un premier rectangle de référence,
- il existe un deuxième plan de référence à 10 mm au plus de la partie de la surface sur laquelle débouchent les deuxièmes fibres optiques tel que chaque deuxième fibre optique a un deuxième cône d'acceptance dont l'intersection avec le deuxième plan de référence forme un deuxième cercle, les deuxièmes cercles de toutes les deuxièmes fibres optiques de la sonde étant inscrits dans un deuxième rectangle de référence, et
- le premier rectangle de référence et le deuxième rectangle de référence ne se recoupent pas.

Bien que certaines caractéristiques soient décrites comme étant relatives à plusieurs premières fibres optiques, il doit être entendu, qu'elles sont aussi appropriées au cas où la sonde ne comprend qu'une seule première fibre optique, sauf si le contraire est explicitement indiqué.

Le dispositif de déclenchement permet de détecter un objet avant qu'il n'arrive dans la zone d'observation de la sonde, de façon à déclencher l'activation de la sonde au moment où l'objet arrive dans la zone d'observation de la sonde. Le dispositif de déclenchement est en amont de la sonde par rapport au défilement des objets. De préférence, le dispositif de déclenchement envoie des informations à une unité de contrôle de façon à activer ou désactiver la sonde. Lorsque le dispositif de déclenchement commence à détecter l'objet, il envoie une information de détection d'objet à l'unité de contrôle qui utilise cette information et la vitesse linéaire de défilement du convoyeur pour calculer le moment d'activation de la sonde. Lorsque le dispositif de déclenchement cesse de détecter l'objet, il envoie une information de détection de convoyeur à l'unité de contrôle qui utilise cette information et la vitesse linéaire de défilement du convoyeur pour calculer le moment de désactivation de la sonde.

Dans le cadre du présent document, une sonde « activée » est une sonde apte à faire une observation. Une « activation » de la sonde comprend préférentiellement une activation d'au moins certaines des deuxièmes fibres optiques, et une « désactivation » de la sonde comprend préférentiellement une désactivation des deuxièmes fibres optiques activées. Il est possible, tout en restant dans le cadre de la présente invention, que la ou les première(s) fibre(s) optique(s) restent activées même quand la sonde est désactivée.

Selon un mode de réalisation, le dispositif de déclenchement comprend deux éléments de détection décalés l'un de l'autre selon la direction latérale. De préférence, chaque élément de détection détecte un point sur le convoyeur. Une information liée à chacun des éléments de détection, c'est-à-dire à chacun des points, est envoyée à l'unité de contrôle.

Selon un mode de réalisation, chaque élément de détection est sur un détecteur laser distinct, les détecteurs lasers étant agencés pour être déplaçables selon la direction latérale. Leur position latérale peut ainsi être adaptée mécaniquement en fonction de la taille des objets sur le convoyeur. Un exemple de détecteur laser adéquat est un détecteur LK-G de Keyence ou un détecteur HL-C de Panasonic.

Selon un autre mode de réalisation, le dispositif de déclenchement émet un faisceau s'étendant selon la direction latérale, les éléments de détection comprenant chacun une portion distincte d'un détecteur agencé pour capter le faisceau après réflexion sur les objets. La position latérale et/ou longitudinale des éléments de détection peut alors être adaptée numériquement en fonction de la taille des objets sur le convoyeur. Un exemple de dispositif de déclenchement adéquat est le détecteur CMOS HSE de Keyence.

Selon un mode de réalisation, les deuxièmes fibres optiques sont réparties sur la surface sur une extension longitudinale et sur une extension latérale telles que l'extension longitudinale est inférieure à l'extension latérale.

Un tel agencement permet une répartition des deuxièmes fibres optiques sur une largeur particulièrement grande, à nombre de deuxièmes fibres optiques donné. En outre, la faible extension longitudinale permet d'augmenter le nombre de mesures faites sur chaque objet lors de son défilement, ce qui améliore la qualité des résultats obtenus par les mesures.

Selon un mode de réalisation, les premières fibres optiques sont réparties sur la surface sur une extension longitudinale et sur une extension latérale telles que l'extension longitudinale est inférieure à l'extension latérale. Un tel agencement, qui comprend nécessairement plusieurs premières fibres optiques, permet une répartition des premières fibres optiques sur une largeur particulièrement grande, à nombre de premières fibres optiques donné. En outre, il est préférable d'éviter d'illuminer le bord des objets car cela détériore la reproductibilité des mesures. En effet, le signal provenant du dessus des objets est plus homogène sur l'ensemble des objets que le signal provenant des bords des objets.

Selon un mode de réalisation, les deuxièmes fibres optiques sont réparties sur une largeur plus grande que la ou les première(s) fibre(s) optiques, la largeur étant prise selon la direction latérale. Cela permet une répartition des deuxièmes fibres optiques sur une largeur particulièrement grande, à nombre de fibres optiques donné. En outre, il est préférable d'éviter d'illuminer le bord du convoyeur car cela détériore la reproductibilité des mesures.

Selon un mode de réalisation, les deuxièmes fibres optiques sont réparties sur une longueur plus petite que la ou les première(s) fibre(s) optiques, la longueur étant prise selon la direction longitudinale. Cela permet une répartition des deuxièmes fibres optiques sur une largeur particulièrement grande, à nombre de fibres optiques donné.

Selon un mode de réalisation, les premières fibres optiques sont réparties en au plus trois rangées s'étendant latéralement. Une telle répartition permet une meilleure répartition des premières fibres optiques en largeur, à nombre donné de premières fibres optiques.

Selon un mode de réalisation, les deuxièmes fibres optiques sont réparties en au plus trois rangées s'étendant latéralement. Cela permet une meilleure répartition des deuxièmes fibres optiques en largeur, à nombre donné de deuxièmes fibres optiques.

Selon un mode de réalisation, dans lequel la sonde comprend plusieurs premières fibres optiques, les deuxièmes fibres optiques sont en moyenne plus écartées les unes des autres que les premières fibres optiques. Cela permet d'améliorer l'observation, pour un nombre de fibres optiques donnés.

Selon un mode de réalisation, la sonde comprend plus de premières fibres optiques que de deuxièmes fibres optiques. En effet, l'agencement de l'ensemble de fibres optiques telle que définie dans l'invention permet de limiter le nombre de deuxièmes fibres optiques, et ainsi, à nombre total de fibres optiques donné, permet d'augmenter le nombre de premières fibres optiques, et donc le rapport signal sur bruit.

L'invention propose en outre un système de mesure comprenant un équipement selon l'un quelconque des modes de réalisation, au moins une source de rayonnement électromagnétique, un dispositif de réception, et un convoyeur agencé pour transporter les objets selon une direction de défilement (qui est la direction longitudinale), de sorte que les objets soient détectable par le dispositif de déclenchement sur une partie du convoyeur et soient observables par la sonde sur une partie du convoyeur. Le premier rectangle de référence est préférentiellement décalé du deuxième rectangle de référence selon la direction de défilement des objets en défilement. En d'autres termes, le premier rectangle de référence est préférentiellement en amont ou en aval du deuxième rectangle de référence. Le premier et le deuxième rectangles de référence ont préférentiellement deux côtés parallèles à la direction de défilement.

Selon un mode de réalisation, le système comprend les objets, la sonde est au-dessus des objets, et le système est agencé pour que le dessus des objets soit situé soit situé entre la surface et au moins une intersection entre un premier et un deuxième cône d'acceptance. Cela permet d'éviter de capter le rayonnement réfléchi par les objets, ce qui est particulièrement intéressant pour l'analyse spectroscopique spatialement résolue qui utilise le rayonnement diffusé.

Selon un mode de réalisation, le système comprend en outre un dispositif d'analyse spectrale agencé pour recevoir des informations du dispositif de réception. Cela permet de réaliser de la spectroscopie spatialement résolue pour chacun des objets.

La présente invention propose aussi le montage d'un équipement selon l'invention dans un système de mesure.

L'invention propose en outre une utilisation d'un équipement ou d'un système de mesure selon l'invention, dans laquelle la ou les premières fibres optiques émettent le rayonnement électromagnétique vers les objets, et les deuxièmes fibres optiques reçoivent le rayonnement électromagnétique provenant des objets. Durant l'utilisation, certaines deuxièmes fibres optiques peuvent être désactivées, par exemple si on se rend compte que le rayonnement électromagnétique à leur emplacement n'est pas suffisant pour faire une analyse spectroscopique de qualité.

Selon l'invention, la détection d'un objet par le dispositif de déclenchement entraine une activation de la sonde.

L'invention propose en outre une utilisation d'un système de mesure comprenant les étapes suivantes :
- la ou les premières fibres optiques émettent le rayonnement électromagnétique vers les objets,
- les deuxièmes fibres optiques reçoivent le rayonnement électromagnétique provenant des objets et le transmettent au dispositif de réception,
- le dispositif de réception reçoit le rayonnement électromagnétique et transmet des informations concernant le rayonnement électromagnétique reçu au dispositif d'analyse spectrale,
- le dispositif d'analyse spectrale réalise une analyse spectrale, et
- le système de mesure transforme des résultats de l'analyse spectrale à l'aide d'un modèle mathématique pour déterminer des caractéristiques physiques et/ou chimiques des objets.
Ensuite, les objets ne répondant pas, à l'issue des calculs, à un ou plusieurs critère(s) déterminé(s) peuvent être mis de côté.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 est une vue latérale schématique d'un système de mesure selon un mode de réalisation de l'invention,
- la figure 2a est une vue latérale schématique d'une sonde selon un mode de réalisation de l'invention,
- la figure 2b est une vue latérale schématique d'une sonde selon un autre mode de réalisation de l'invention,
- la figure 3 est une vue du dessus schématique d'une sonde et d'un convoyeur selon un mode de réalisation de l'invention,
- la figure 4 est une vue du dessous schématique d'une sonde ayant un agencement de fibres optiques selon un premier mode de réalisation de la sonde,
- la figure 5a est une vue du dessous schématique de fibres optiques dans un agencement selon un deuxième mode de réalisation de la sonde,
- la figure 5b est une vue du dessous schématique de fibres optiques dans un agencement selon un troisième mode de réalisation de la sonde,
- la figure 5c est une vue du dessous schématique de fibres optiques dans un agencement selon un quatrième mode de réalisation de la sonde,
- les figures 6a à 6f sont des vues du dessus schématiques successives du trajet d'un objet passant sous le dispositif de déclenchement puis sous la sonde,
- la figure 7a illustre un premier mode de réalisation du dispositif de déclenchement, et
- la figure 7b illustre un premier mode de réalisation du dispositif de déclenchement.

### Modes de réalisation de l'invention

La présente invention est décrite avec des réalisations particulières et des références à des figures mais l'invention n'est pas limitée par celles-ci. Les dessins ou figures décrits ne sont que schématiques, ne sont en général pas à l'échelle et ne sont pas limitants. En outre, les fonctions décrites peuvent être réalisées par d'autres structures que celles décrites dans le présent document.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

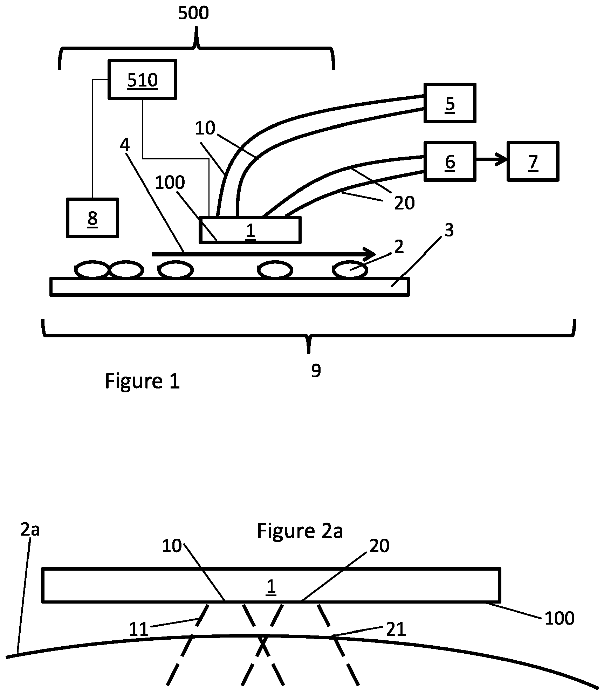

La figure 1 illustre schématiquement un système de mesure 9 selon un mode de réalisation de l'invention. Le système de mesure 9 comprend un équipement de mesure 500 selon l'invention, et un convoyeur 3 agencé pour transporter les objets 2 selon une direction de défilement 4. L'équipement de mesure 500 comprend une sonde 1 et un dispositif de déclenchement 8 en amont de la sonde 1, agencés de sorte que les objets 2 soient détectable par le dispositif de déclenchement sur une partie du convoyeur 3 (la zone de détection du dispositif de déclenchement 8) et observables par la sonde 1 sur une partie du convoyeur 3 (la zone d'observation de la sonde 1). Le système de mesure 9 comprend en outre au moins une source 5 de rayonnement électromagnétique, un dispositif de réception 6, et préférentiellement un dispositif d'analyse spectrale 7 agencé pour recevoir des informations du dispositif de réception 6. Les objets 2 ont préférentiellement une extension horizontale entre 2 et 25 mm. Ce sont par exemple des médicaments.

Le dispositif de déclenchement 8 comprend préférentiellement un détecteur laser détectant la présence d'objets 2 sur le convoyeur 3. Il permet d'activer la sonde 1 : la détection d'un objet 2 par le dispositif de déclenchement 8 résulte en une observation de l'objet 2 par la sonde 1. De cette manière, seuls les objets 2 sont observés par la sonde 1, et le convoyeur 3 n'est pas pris en considération.

L'équipement de mesure 500 comprend préférentiellement une unité de contrôle 510 échangeant des informations notamment avec le dispositif de déclenchement 8 et la sonde 1.

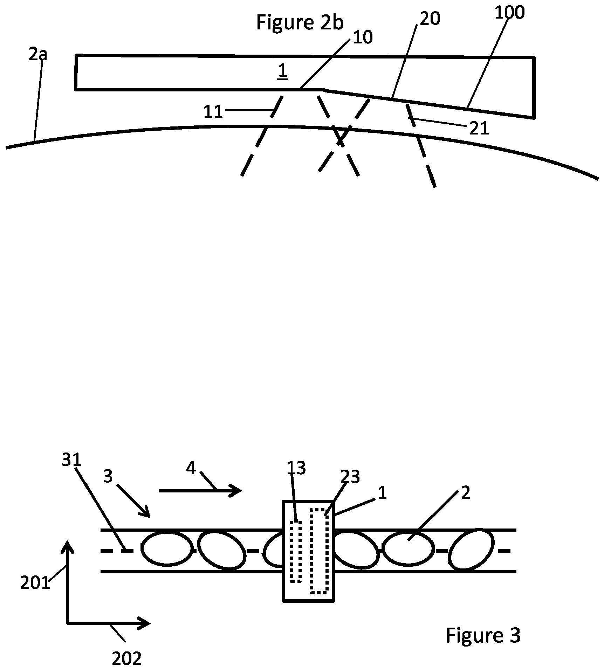

La sonde 1 comprend une surface 100 orientée vers le convoyeur 3, et sur laquelle débouchent une ou des premières fibres optiques 10 et des deuxièmes fibres optiques 20. Les extrémités de la ou des premières fibres optiques 10 et des deuxièmes fibres optiques 20 sont préférentiellement à fleur de la surface 100. La surface 100 s'étend selon une direction latérale 201 et une direction longitudinale 202 (indiquées figure 3) qui sont perpendiculaires l'une à l'autre. La sonde 1 est préférentiellement fixe. La trajectoire des objets 2 peut être quelconque. La vitesse linéaire de défilement est préférentiellement entre 0,1 et 3,0 m/s.

La source 5 émet un rayonnement électromagnétique, ayant notamment une composante infra-rouge, qui est transmis par la ou les premières fibres optiques 10 et émis par les extrémités de la ou des premières fibres optiques 10 vers les objets 2. Les objets 2 réfléchissent et diffusent le rayonnement électromagnétique, notamment en direction des deuxièmes fibres optiques 20. Lors de l'interaction entre le rayonnement électromagnétique et les objets 2, les caractéristiques du rayonnement électromagnétique sont modifiées. Cela permettra de réaliser une analyse spectroscopique des objets 2 sur base du rayonnement électromagnétique diffusé par les objets 2 et capté par les deuxièmes fibres optiques 20. Les extrémités des deuxièmes fibres optiques 20 captent ainsi du rayonnement électromagnétique provenant des objets 2, et les deuxièmes fibres optiques 20 transmettent ce rayonnement électromagnétique au dispositif de réception 6.

Le dispositif de réception 6 comprend préférentiellement une caméra, avec un CCD, qui reçoit le rayonnement électromagnétique. Le dispositif de réception 6 envoie des informations concernant le rayonnement électromagnétique au dispositif d'analyse spectrale 7. Le dispositif d'analyse spectrale 7 réalise une analyse spectrale, de préférence par spectroscopie infra-rouge. Le système de mesure 9 peut alors comparer des résultats de l'analyse spectrale avec un modèle théorique pour déterminer des caractéristiques physiques et/ou chimiques des objets 2. Des méthodes de calcul sont mises en place pour ne prendre en compte que l'information pertinente, et ainsi éviter les effets dus aux bords des objets 2.

Comme illustré schématiquement aux figures 2a, 2b, chacune des premières fibres optiques 10 a un premier cône d'acceptance 11, et chacune des deuxièmes fibres optiques 20 a un deuxième cône d'acceptance 21. L'homme du métier sait que le cône d'acceptance d'une fibre optique est tel que si un rayon lumineux tente de pénétrer la fibre optique en provenant de ce cône, alors le rayon sera guidé par réflexion totale interne ; dans le cas contraire, le rayon ne sera pas guidé.

Le système de mesure 9 est de préférence agencé pour qu'au moins une intersection entre premier(s) 11 et deuxièmes 21 cônes d'acceptance soit entre le dessus 2a des objets 2 et le dessous des objets 2.

Dans l'invention, l'agencement des premières fibres optiques 10 et des deuxièmes fibres optiques 20 sur la surface 100 de la sonde 1 est tel que les deuxièmes fibres optiques 20 sont décalées de la ou des premières fibres optiques 10 selon la direction longitudinale 202 et situées d'un même côté de la ou des premières fibres optiques 10 et tel qu'au moins un des deuxièmes cônes d'acceptance 21 intersecte au moins un des premiers cônes d'acceptance 11 (ou le premier cône d'acceptance 11 s'il n'y a qu'une seule première fibre optique) à moins de 10 mm de la surface 100. De préférence, un premier cône d'acceptance 11 et un deuxième cône d'acceptance 21 se croisent entre 1 et 2 mm de la surface 100.

La figure 3 illustre schématiquement une disposition possible de la sonde 1 par rapport au convoyeur 3. Le convoyeur 3 est préférentiellement horizontal et porte les objets 2. La sonde 1 est située au-dessus du convoyeur 3, avec la surface 100 dirigée vers le bas. Les objets 2 peuvent être présents en une file sur le convoyeur 3 (comme illustré à la figure 3), en plusieurs files, ou en une disposition aléatoire.

Dans le cadre du présent document, la direction latérale 201 est la direction de la largeur du convoyeur 3, et la direction longitudinale 202 est la direction de défilement 4, et est perpendiculaire à la direction latérale 201. La direction latérale 201 pourrait être appelée « première direction », et la direction longitudinale 202 pourrait être appelée « deuxième direction » ou « directement de défilement ».

Dans l'invention, l'agencement des premières fibres optiques 10 et des deuxièmes fibres optiques 20 sur la surface 100 de la sonde 1 est tel que toutes les premières fibres optiques 10 de la sonde 1 sont inscrites dans un premier rectangle 13, et toutes les deuxièmes fibres optiques 20 de la sonde 1 sont inscrites dans un deuxième rectangle 23 qui ne recoupe pas le premier rectangle 13. Si la sonde ne comprend qu'une première fibre optique 10, elle est inscrite dans un premier rectangle 13 qui ne recoupe pas le deuxième rectangle 23.

Le premier 13 et le deuxième 23 rectangles ont préférentiellement deux côtés parallèles à la direction de défilement 4. Le premier 13 et le deuxième 23 rectangles sont préférentiellement inscrits dans un rectangle de 3 mm x 4 mm.

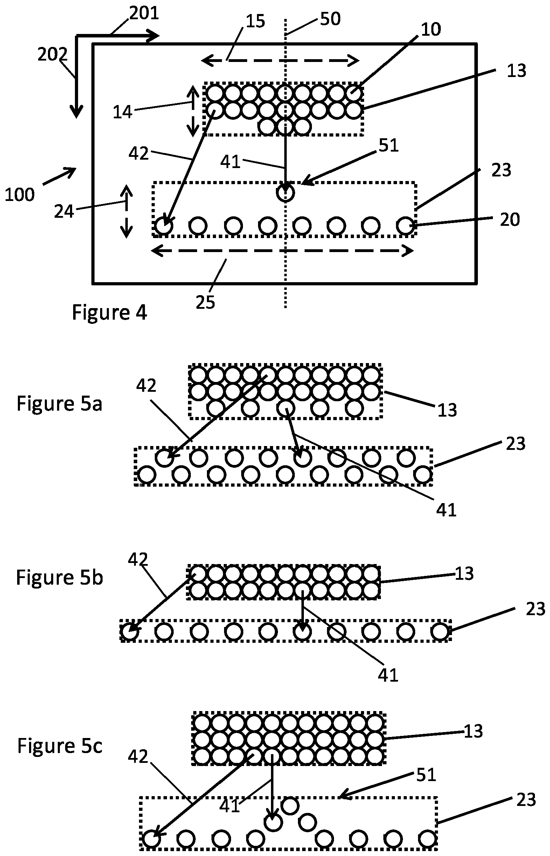

Le premier rectangle 13 est préférentiellement situé en amont ou en aval du deuxième rectangle 23 selon la direction de défilement 4. Le premier rectangle 13 et le deuxième rectangle 23 sont préférentiellement centrés latéralement par rapport à un même plan central 50 longitudinal (visible sur la figure 4) qui est confondu avec un plan longitudinal centré 31 par rapport au convoyeur 3.

La figure 4 illustre un agencement des fibres optiques dans un premier mode de réalisation de l'invention. Certains paramètres de l'invention y sont également représentés, notamment l'extension longitudinale 14 des premières fibres optiques 10, l'extension latérale 15 des premières fibres optiques 10, l'extension longitudinale 24 des deuxièmes fibres optiques 20, et l'extension latérale 25 des deuxièmes fibres optiques 20 sur la surface 100. Lorsque la sonde 1 est prise isolément du convoyeur 3, les directions latérale 201 et longitudinales 202 sont perpendiculaires l'une à l'autre, et sont considérés indépendamment de tout référentiel extérieur.

Les flèches 41 et 42 illustrent que l'invention permet d'obtenir à la fois une distance particulièrement courte (flèche 41) et une distance particulièrement longue (flèche 42) entre une première fibre optique 10 et une deuxième fibre optique 20.

La figure 5a illustre un agencement des fibres optiques dans un deuxième mode de réalisation de l'invention. La figure 5b illustre un agencement des fibres optiques dans un troisième mode de réalisation de l'invention. La figure 5c illustre un agencement des fibres optiques dans un quatrième mode de réalisation de l'invention.

Les quatre modes de réalisation illustrés, qui ne sont pas limitatifs, permettent de visualiser certaines caractéristiques de l'invention, qui peuvent être considérées en combinaison ou indépendamment dans le cadre de l'invention :
- l'extension longitudinale 24 des deuxièmes fibres optiques 20 est préférentiellement inférieure à leur extension latérale 25 (figures 4, 5a, 5b, 5c);
- l'extension longitudinale 14 des premières fibres optiques 10 est préférentiellement inférieure à leur extension latérale 15 (figures 4, 5a, 5b, 5c);
- l'extension latérale 25 des deuxièmes fibres optiques 20 est supérieure à l'extension latérale 15 des premières fibres optiques 10 (figures 4, 5a, 5b, 5c);
- l'extension longitudinale 14 des premières fibres optiques 10 est supérieure (figures 5a, 5b) ou égale (figures 4, 5c) à l'extension longitudinale 24 des deuxièmes fibres optiques 20;
- les premières fibres optiques 10 sont réparties en deux (figure 5b) ou trois (figures 4, 5a, 5c) rangées s'étendant latéralement ;
- les deuxièmes fibres optiques 20 sont réparties en une (figures 5a), deux (figures 4, 5b) ou trois (figure 5c) rangées s'étendant latéralement ;
- les deuxièmes fibres optiques 20 sont en moyenne plus écartées les unes des autres que les premières fibres optiques 10 (figures 4, 5a, 5b, 5c); et/ou
- il y a plus de premières fibres optiques 10 que de deuxièmes fibres optiques 20 (figures 4, 5a, 5b, 5c).

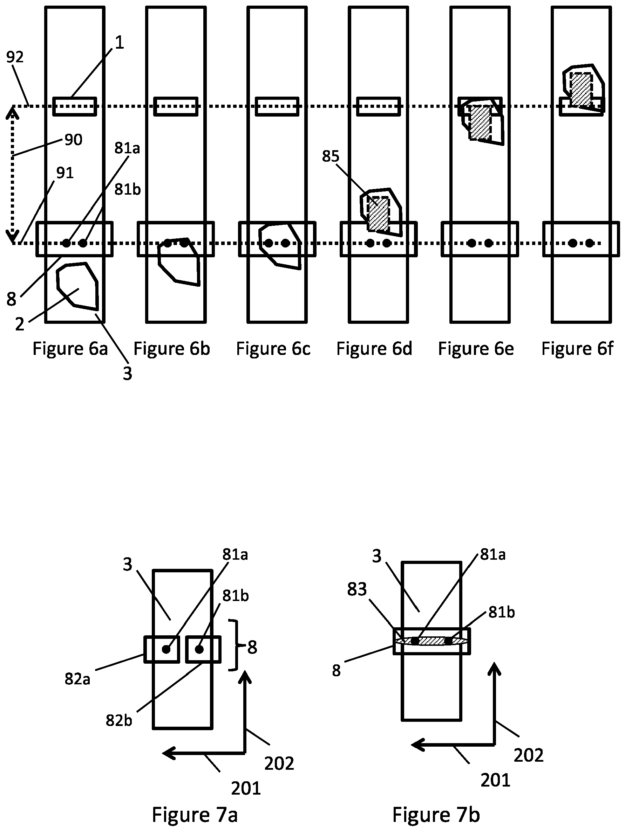

Les figures 6a à 6f illustrent le déplacement de l'objet 2 avec le convoyeur 3. En considérant un repère 91 sur le dispositif de déclenchement 8 et un repère 92 sur la sonde 1, la distance 90 entre ces repères 91 et 92 est parcourue par l'objet 2 en un temps t égal au rapport entre cette distance 90 et la vitesse linéaire de défilement. Le dispositif de déclenchement 8 comprend deux éléments de détection 81a, 81b latéralement décalés l'un de l'autre. Chacun des éléments de détection 81a, 81b détecte un point sur le convoyeur et le dispositif de déclenchement 8 envoie à l'unité de contrôle 510 des informations liées à ces points. Ces informations peuvent être des informations de détection d'objet (lorsque l'élément de détection 81a ou 81b détecte l'objet 2) ou des informations de détection de convoyeur (lorsque l'élément de détection 81a ou 81b ne détecte pas l'objet 2 et détecte donc le convoyeur 3).

A la figure 6a, l'objet 2 est en amont du dispositif de déclenchement 8. Le dispositif de déclenchement 8 détecte le convoyeur 3, et envoie éventuellement des informations de détection de convoyeur. La sonde 1 est désactivée.

A la figure 6b, le premier élément de détection 81a détecte l'objet 2 alors qu'il détectait précédemment le convoyeur 3. Le dispositif de déclenchement 8 envoie l'information de détection d'objet pour le premier élément de détection 81a à l'unité de contrôle 510.

A la figure 6c, le deuxième élément de détection 81b détecte aussi l'objet 2 alors qu'il détectait précédemment le convoyeur 3. Le dispositif de déclenchement 8 envoie l'information de détection d'objet pour le premier élément de détection 81a et pour le deuxième élément de détection 81b à l'unité de contrôle 510.

A la figure 6d, le premier 81a et le deuxième 81b éléments de détection détectent le convoyeur 3 alors qu'ils détectaient précédemment l'objet 2. Le dispositif de déclenchement 8 envoie l'information de détection de convoyeur pour le premier élément de détection 81a et pour le deuxième élément de détection 81b à l'unité de contrôle 510. L'unité de contrôle 510 détermine éventuellement un modèle 85 de l'objet 2 et détermine son moment d'arrivée dans la zone d'observation de la sonde 1. La surface avant du modèle 85 de l'objet 2 correspond au moment où les deux éléments de détection 81a, 81b détectent l'objet 2 (entre la figure 6b et la figure 6c). La surface arrière du modèle 85 de l'objet 2 correspond au moment où au moins un des deux éléments de détection 81a, 81b détectent le convoyeur 3 (entre la figure 6c et la figure 6d).

L'unité de contrôle 510 utilise les informations qu'elle a reçues du dispositif de déclenchement 8, et le temps t égal au rapport entre la distance 90 et la vitesse linéaire de défilement pour déterminer une période d'observation de l'objet 2 durant laquelle la sonde 1 est activée de façon à observer l'objet 2. De préférence, elle utilise le modèle 85 pour déterminer la période d'observation de l'objet 2.

A la figure 6e, l'objet 2 entre dans la zone d'observation de la sonde 1 pour être observé par la sonde 1. A la figure 6f, l'objet 2 sort de la zone d'observation de la sonde 1 et n'est plus observé par la sonde 1. La période d'observation de l'objet 2 a lieu de préférence lorsque seul l'objet 2 est observable par la sonde 1 (entre les figures 6e et 6f), par exemple lorsque seul le modèle 85 est observable par la sonde 1. Ainsi, la sonde 1 n'observe rien d'autre que l'objet 2, ce qui permet d'éviter des effets parasites provenant de l'observation d'une partie du convoyeur ou d'effets de bord.

La figure 7a illustre un premier mode de réalisation du dispositif de déclenchement 8, dans lequel il comprend des détecteurs laser 82a, 82b comprenant chacun un des éléments de détection 81a, 81b. Ils sont agencés pour être déplaçables latéralement. De préférence, chacun des détecteurs lasers 82a, 82b détecte un point sur le convoyeur.

La figure 7b illustre un deuxième mode de réalisation du dispositif de déclenchement 8, dans lequel il comprend un émetteur émettant un faisceau 83 s'étendant latéralement et un détecteur captant le faisceau suite à sa réflexion sur l'objet 2 ou le convoyeur 3. Les éléments de détection 81a, 81b comprennent chacun une portion différente du détecteur, apte à détecter un endroit différent sur l'objet 2 ou le convoyeur 3. Chaque élément de détection 81a, 81b est par exemple formée d'un ou plusieurs pixels, distinct(s) du ou des pixel(s) de l'autre élément de détection. Le dispositif de déclenchement peut être par exemple un profilomètre 2D.

En d'autres termes, l'invention se rapporte à un équipement de mesure 500 utilisable notamment dans le cadre d'un contrôle avec analyse spectroscopique d'objets 2 individuels en défilement. L'équipement de mesure 500 comprend une sonde 1 ayant une surface 100 où débouchent une ou des fibres optiques d'illumination 10 et des fibres optiques de mesure 20. Les fibres optiques 10, 20 sont agencées pour qu'au moins un des deuxièmes cônes d'acceptance 21 croise au moins un premier cône d'acceptance 11 à moins de 10 mm de la surface 100. L'équipement de mesure 500 comprend aussi un dispositif de déclenchement 8 détectant les objets 2 en amont de la sonde 1 de façon à activer ou désactiver l'observation des objets 2 par la sonde.

La présente invention a été décrite en relation avec des modes de réalisation et des agencements spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Equipement de mesure (500) comprenant une sonde (1) pour observer des objets (2) en défilement selon une direction longitudinale (202), de préférence pour réaliser une analyse spectroscopique spatialement résolue sur lesdits objets (2), un dispositif de déclenchement (8) décalé de la sonde (1) selon la direction longitudinale (202), et une unité de contrôle (510) ;
la sonde (1) comprenant :
• une surface (100) s'étendant selon la direction longitudinale (202) et selon une direction latérale (201) perpendiculaire à la direction longitudinale (202),
• une ou plusieurs premières fibres optiques (10) débouchant sur ladite surface (100) et agencées pour émettre du rayonnement électromagnétique provenant d'au moins une source (5), chaque première fibre optique (10) ayant un premier cône d'acceptance (11),
• des deuxièmes fibres optiques (20) débouchant sur ladite surface (100), et agencées pour capter du rayonnement électromagnétique et le transmettre à un dispositif de réception (6), chaque deuxième fibre optique (20) ayant un deuxième cône d'acceptance (21), les deuxièmes fibres optiques (20) étant décalées de la ou les premières fibres optiques (10) selon la direction longitudinale (202) et situées d'un même côté de la ou les premières fibres optiques (10);
la sonde (1) étant telle qu'au moins un des deuxièmes cônes d'acceptance (21) intersecte au moins un premier cône d'acceptance (11) à moins de 10 mm de ladite surface (100) ;
le dispositif de déclenchement (8) étant configuré pour détecter les objets (2) en défilement ; et
l'équipement de mesure (500) étant configuré pour activer l'observation des objets (2) par la sonde (1) en réaction à leur détection par le dispositif de déclenchement (8).

2. Equipement de mesure selon la revendication 1, dans lequel le dispositif de déclenchement (8) comprend deux éléments de détection (81a, 81b) décalés l'un de l'autre selon la direction latérale (201).

3. Equipement de mesure selon la revendication précédente, dans lequel le dispositif de déclenchement (8) comprend des détecteurs laser (82a, 82b) distincts, les détecteurs lasers (82a, 82b) étant agencés pour être déplaçables selon la direction latérale (201), chacun des détecteurs laser (82a, 82b) comprenant un des éléments de détection (81a, 81b).

4. Equipement de mesure selon la revendication 2, dans lequel le dispositif de déclenchement (8) émet un faisceau (83) s'étendant selon la direction latérale (201), les éléments de détection (81a, 81b) comprenant chacun une portion distincte d'un détecteur agencé pour capter le faisceau (83) après réflexion sur les objets (2).

5. Equipement de mesure selon l'une quelconque des revendications précédentes, dans lequel les deuxièmes fibres optiques (20) sont réparties sur la surface (100) sur une extension longitudinale (24) et sur une extension latérale (25) de sorte que l'extension longitudinale (24) est inférieure à l'extension latérale (25).

6. Equipement de mesure selon l'une quelconque des revendications précédentes, dans lequel les deuxièmes fibres optiques (20) sont réparties sur une largeur plus grande que la ou les première(s) fibre(s) optiques (10), la largeur étant prise selon la direction latérale (201).

7. Equipement de mesure selon l'une quelconque des revendications précédentes, dans lequel les deuxièmes fibres optiques (20) sont réparties sur une longueur plus petite que la ou les première(s) fibre(s) optiques (10), la longueur étant prise selon la direction longitudinale (202).

8. Equipement de mesure selon l'une quelconque des revendications précédentes, dans lequel les premières fibres optiques (10) sont réparties en au plus trois rangées s'étendant latéralement.

9. Equipement de mesure selon l'une quelconque des revendications précédentes, dans lequel les deuxièmes fibres optiques (20) sont réparties en au plus trois rangées s'étendant latéralement.

10. Sonde selon l'une quelconque des revendications précédentes, dans laquelle les deuxièmes fibres optiques (20) sont en moyenne plus écartées les unes des autres que les premières fibres optiques (10).

11. Système de mesure (9) comprenant un équipement de mesure (500) selon l'une quelconque des revendications précédentes, au moins une source (5) de rayonnement électromagnétique, un dispositif de réception (6), et un convoyeur (3) agencé pour transporter les objets (2) selon la direction longitudinale (202), de sorte que les objets (2) soient détectables par le dispositif de déclenchement (8) sur une partie du convoyeur (3) et soient observables par la sonde (1) sur une partie du convoyeur (3).

12. Système de mesure (9) selon la revendication précédente, comprenant en outre les objets (2), dans lequel la sonde (1) est au-dessus des objets (2), le système de mesure (9) étant agencé pour que le dessus (2a) des objets (2) soit situé entre la surface (100) et au moins une intersection entre un premier (11) et un deuxième (21) cône d'acceptance.

13. Système de mesure (9) selon la revendication 11 ou 12, comprenant en outre un dispositif d'analyse spectrale (7) agencé pour recevoir des informations du dispositif de réception (6).

14. Utilisation d'un équipement de mesure (500) selon l'une quelconque des revendications 1 à 10, ou d'un système de mesure (9) selon l'une quelconque des revendications 11 à 13, dans laquelle la ou les premières fibres optiques (10) émettent le rayonnement électromagnétique vers les objets (2), et les deuxièmes fibres optiques (20) reçoivent le rayonnement électromagnétique provenant des objets (2).

15. Utilisation selon la revendication précédente, dans laquelle une détection d'un objet (2) par le dispositif de déclenchement (8) entraine une activation de la sonde (1).

## Patentansprüche

1. Messeinrichtung (500), umfassend eine Sonde (1) zur Beobachtung von Objekten (2), die sich in einer Längsrichtung (202) bewegen, vorzugsweise zur Durchführung einer räumlich aufgelösten Spektroskopie-Analyse an den Objekten (2), eine Auslösevorrichtung (8), die von der Sonde (1) in der Längsrichtung (202) versetzt ist, und eine Steuereinheit (510);
wobei die Sonde (1) Folgendes umfasst:
- eine Oberfläche (100), die sich in der Längsrichtung (202) und in einer Seitenrichtung (201) senkrecht zur Längsrichtung (202) erstreckt,
- eine oder mehrere erste optische Fasern (10), die in die Oberfläche (100) münden und eingerichtet sind, um elektromagnetische Strahlung zu emittieren, die von mindestens einer Quelle (5) stammt, wobei jede erste optische Faser (10) einen ersten Akzeptanzkegel (11) aufweist,
- zweite optische Fasern (20), die in die Oberfläche (100) münden und eingerichtet sind, um elektromagnetische Strahlung einzufangen und diese an eine Empfangsvorrichtung (6) zu übertragen, wobei jede zweite optische Faser (20) einen zweiten Akzeptanzkegel (21) aufweist, wobei die zweiten optischen Fasern (20) von der oder den ersten optischen Fasern (10) in der Längsrichtung (202) versetzt sind und sich auf einer gleichen Seite der ersten optischen Faser(n) (10) befinden;
wobei die Sonde (1) derart ist, dass mindestens einer der zweiten Akzeptanzkegel (21) mindestens einen ersten Akzeptanzkegel (11) bei weniger als 10 mm von der Oberfläche (100) schneidet;
wobei die Auslösevorrichtung (8) konfiguriert ist, um die sich bewegenden Objekte (2) zu erfassen; und
wobei die Messeinrichtung (500) konfiguriert ist, um die Beobachtung der Objekte (2) durch die Sonde (1) als Reaktion auf deren Erfassung durch die Auslösevorrichtung (8) zu aktivieren.

2. Messeinrichtung nach Anspruch 1, wobei die Auslösevorrichtung (8) zwei Erfassungselemente (81a, 81b) umfasst, die in der Seitenrichtung (201) voneinander versetzt sind.

3. Messeinrichtung nach dem vorstehenden Anspruch, wobei die Auslösevorrichtung (8) unterschiedliche Laser-Detektoren (82a, 82b) umfasst, wobei die Laser-Detektoren (82a, 82b) eingerichtet sind, um in der Seitenrichtung (201) verschiebbar zu sein, wobei jeder der Laser-Detektoren (82a, 82b) eines der Erfassungselemente (81a, 81b) umfasst.

4. Messeinrichtung nach Anspruch 2, wobei die Auslösevorrichtung (8) ein Strahlenbündel (83) emittiert, das sich in der Seitenrichtung (201) erstreckt, wobei die Erfassungselemente (81a, 81b) jeweils einen unterschiedlichen Abschnitt eines Detektors umfassen, der eingerichtet ist, um das Strahlenbündel (83) nach einer Reflexion auf den Objekten (2) einzufangen.

5. Messeinrichtung nach einem der vorstehenden Ansprüche, wobei die zweiten optischen Fasern (20) derart auf der Oberfläche (100) über eine Längserstreckung (24) und über eine Seitenerstreckung (25) verteilt sind, dass die Längserstreckung (24) kleiner ist als die Seitenerstreckung (25).

6. Messeinrichtung nach einem der vorstehenden Ansprüche, wobei die zweiten optischen Fasern (20) über eine größere Breite verteilt sind als die erste(n) optischen(n) Faser(n) (10), wobei die Breite in der Seitenrichtung (201) genommen wird.

7. Messeinrichtung nach einem der vorstehenden Ansprüche, wobei die zweiten optischen Fasern (20) über eine größere Länge verteilt sind als die erste(n) optischen(n) Faser(n) (10), wobei die Länge in der Längsrichtung (202) genommen wird.

8. Messeinrichtung nach einem der vorstehenden Ansprüche, wobei die ersten optischen Fasern (10) auf höchstens drei Reihen verteilt sind, die sich lateral erstrecken.

9. Messeinrichtung nach einem der vorstehenden Ansprüche, wobei die zweiten optischen Fasern (20) auf höchstens drei Reihen verteilt sind, die sich lateral erstrecken.

10. Messeinrichtung nach einem der vorstehenden Ansprüche, wobei die zweiten optischen Fasern (20) durchschnittlich weiter voneinander beabstandet sind als die ersten optischen Fasern (10).

11. Messsystem (9), umfassend eine Messeinrichtung (500) nach einem der vorstehenden Ansprüche, mindestens eine Quelle (5) für elektromagnetische Strahlung, eine Empfangsvorrichtung (6) und einen Förderer (3), der eingerichtet ist, um die Objekte (2) in der Längsrichtung (202) derart zu transportieren, dass die Objekte (2) über einen Teil des Förderers (3) von der Auslösevorrichtung (8) erfassbar sind und über einen Teil des Förderers (3) von der Sonde (1) beobachtbar sind.

12. Messsystem (9) nach dem vorstehenden Anspruch, das weiter die Objekte (2) umfasst, wobei die Sonde (1) oberhalb der Objekte (2) ist, wobei das Messsystem (9) so eingerichtet ist, dass sich die Oberseite (2a) der Objekte (2) zwischen der Oberfläche (100) und mindestens einem Schnittpunkt zwischen einem ersten (11) und einem zweiten (21) Akzeptanzkegel befindet.

13. Messsystem (9) nach Anspruch 11 oder 12, weiter umfassend eine Spektralanalysevorrichtung (7), die eingerichtet ist, um Informationen von der Empfangsvorrichtung (6) zu empfangen.

14. Verwendung einer Messeinrichtung (500) nach einem der Ansprüche 1 bis 10 oder eines Messsystems (9) nach einem der Ansprüche 11 bis 13, wobei die erste(n) optische(n) Faser(n) (10) eine elektromagnetische Strahlung in Richtung der Objekte (2) emittieren und die zweiten optischen Fasern (20) die von den Objekten (2) stammende elektromagnetische Strahlung empfangen.

15. Verwendung nach dem vorstehenden Anspruch, wobei eine Erfassung eines Objekts (2) durch die Auslösevorrichtung (8) eine Aktivierung der Sonde (1) bewirkt.

## Claims

1. Measurement equipment (500) comprising a probe (1) for observing objects (2) moving along a longitudinal direction (202), preferably for carrying out a spatially resolved spectroscopic analysis on said objects (2), a triggering device (8) offset from the probe (1) along the longitudinal direction (202), and a control unit (510);
the probe (1) comprising:
• a surface (100) extending along the longitudinal direction (202) and along a lateral direction (201) perpendicular to the longitudinal direction (202),
• one or more first optical fibres (10) opening out onto said surface (100) and arranged to emit electromagnetic radiation from at least one source (5), each first optical fibre (10) having a first acceptance cone (11),
• second optical fibres (20) opening out onto said surface (100), and arranged to capture electromagnetic radiation and transmit it to a receiving device (6), each second optical fibre (20) having a second acceptance cone (21), the second optical fibres (20) being offset from the first optical fibre or fibres (10) along the longitudinal direction (202) and located on a same side of the first optical fibre or fibres (10);
the probe (1) being such that at least one of the second acceptance cones (21) intersects at least one first acceptance cone (11) at less than 10 mm of said surface (100);
the triggering device (8) being configured to detect the moving objects (2); and
the measurement equipment (500) being configured to activate the observation of the objects (2) by the probe (1) in response to their detection by the triggering device (8).

2. Measurement equipment according to claim 1, wherein the triggering device (8) comprises two detecting elements (81a, 81b) offset from each other along the lateral direction (201).

3. Measurement equipment according to the preceding claim, wherein the triggering device (8) comprises separate laser detectors (82a, 82b), the laser detectors (82a, 82b) being arranged to be displaceable along the lateral direction (201), each of the laser detectors (82a, 82b) comprising one of the detecting elements (81a, 81b).

4. Measurement equipment of claim 2, wherein the triggering device (8) emits a beam (83) extending along the lateral direction (201), the detecting elements (81a, 81b) each comprising a separate segment of a detector arranged to capture the beam (83) after reflection on the objects (2).

5. Measurement equipment according to any of the preceding claims, wherein the second optical fibres (20) are distributed over the surface (100) over a longitudinal extension (24) and over a lateral extension (25) such that the longitudinal extension (24) is less than the lateral extension (25).

6. Measurement equipment according to any of the preceding claims, wherein the second optical fibres (20) are distributed over a greater width than the first optical fibre or fibres (10), the width being taken along the lateral direction (201).

7. Measurement equipment according to any of the preceding claims, wherein the second optical fibres (20) are distributed over a smaller length than the first optical fibre or fibres (10), the length being taken along the longitudinal direction (202).

8. Measurement equipment according to any of the preceding claims, wherein the first optical fibres (10) are distributed in at most three laterally extending rows.

9. Measurement equipment according to any of the preceding claims, wherein the second optical fibres (20) are distributed in at most three laterally extending rows.

10. Probe according to any of the preceding claims, wherein the second optical fibres (20) are on average further apart from each other than the first optical fibres (10).

11. Measurement system (9) comprising a measurement equipment (500) according to any of the preceding claims, at least one source (5) of electromagnetic radiation, a receiving device (6), and a conveyor (3) arranged to transport the objects (2) along the longitudinal direction (202), so that the objects (2) are detectable by the triggering device (8) on a portion of the conveyor (3) and are observable by the probe (1) on a portion of the conveyor(3).

12. Measurement system (9) according to the preceding claim, further comprising the objects (2), wherein the probe (1) is above the objects (2), the measurement system (9) being arranged so that the top (2a) of the objects (2) is located between the surface (100) and at least one intersection between a first (11) and a second (21) cone of acceptance.

13. Measurement system (9) according to claim 11 or 12, further comprising a spectral analysis device (7) arranged to receive information from the receiving device (6).

14. Use of a measurement equipment (500) according to any one of claims 1 to 10, or a measurement system (9) according to any one of claims 11 to 13, wherein the first optical fibre or fibres (10) emit electromagnetic radiation towards the objects (2), and the second optical fibres (20) receive electromagnetic radiation from the objects (2).

15. Use according to the preceding claim, wherein a detection of an object (2) by the triggering device (8) leads to an activation of the probe (1).
